Europäisches Patentamt

European Patent Office

Office européen des brevets

(19)

(11) Numéro de publication : **0 486 357 A1**

(12) # DEMANDE DE BREVET EUROPEEN

(21) Numéro de dépôt : **91402951.7**

(51) Int. Cl.⁵ : **G02F 1/33**

(22) Date de dépôt : **05.11.91**

(30) Priorité : **13.11.90 FR 9014039**

(43) Date de publication de la demande :
**20.05.92 Bulletin 92/21**

(84) Etats contractants désignés :
**DE GB IT NL**

(71) Demandeur : **THOMSON-CSF**
**51, Esplanade du Général de Gaulle**
**F-92800 Puteaux (FR)**

(72) Inventeur : **Broussoux, Dominique**
**THOMSON-CSF, SCPI, Cédex 67**
**F-92045 Paris la Défense (FR)**
Inventeur : **Robin, Philippe**
**THOMSON-CSF, SCPI, Cédex 67**
**F-92045 Paris la Défense (FR)**
Inventeur : **Loiseaux, Brigitte**
**THOMSON-CSF, SCPI, Cédex 67**
**F-92045 Paris la Défense (FR)**
Inventeur : **Schnell, Jean-Philippe**
**THOMSON-CSF, SCPI, Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Déflecteur de faisceau lumineux comprenant un réseau de Bragg.**

(57) L'invention concerne un déflecteur de faisceau lumineux comprenant un empilement de couches transparentes d'indices de réfraction alternés se comportant comme un réseau de Bragg (RB) et un dispositif de commande électrique (Ei, Ej) ou acoustique.
Application à la visualisation.

FIG.1

EP 0 486 357 A1

La présente invention concerne un déflecteur de faisceau lumineux généralement utilisable par exemple pour des applications dans le domaine de la visualisation, de la détection, ou du traitement du signal.

En visualisation par exemple, on peut chercher à balayer un écran par un faisceau lumineux modulé, à la manière d'un balayage d'écran cathodique par un faisceau d'électrons modulé.

En détection, on peut chercher à illuminer un champ par un faisceau qui balaye ce champ, pour y trouver une cible.

En traitement de signal, on peut chercher à corréler des informations optiques par des informations électriques.

Un des problèmes qu'on cherche à résoudre pour un déflecteur de faisceau lumineux, est son aptitude à réagir très rapidement à une commande de déflexion; une autre caractéristique très importante est le rendement optique, c'est-à-dire l'aptitude à conserver un niveau d'énergie de faisceau défléchi aussi proche que possible du niveau du faisceau initial.

On a déjà proposé dans l'art antérieur des déflecteurs dits "acousto-optiques" qui fonctionnent de la manière suivante :

– dans un cristal transparent d'indice de réfraction n on envoie une onde acoustique de fréquence et de forme d'onde bien déterminées; cette onde se propage dans le cristal en y créant des contraintes qui modifient localement l'indice de réfraction; il s'établit alors dans le cristal un réseau périodique de variations locales d'indice; la périodicité est dans le sens de propagation de l'onde;

– un faisceau lumineux incident voit devant lui une structure périodique; cette structure est diffractante par nature en raison de sa périodicité; la diffraction du faisceau incident s'exerce dans des directions préférentielles qui sont fonction de la période spatiale du réseau; on recueille donc un faisceau diffracté dans ces directions, celles-ci étant différentes de la direction d'incidence initiale : si on sélectionne une des directions de réfraction privilégiées, on constitue un faisceau de sortie, de direction différente du faisceau initial : il y a déflexion du faisceau incident;

– en modifiant la fréquence de l'onde acoustique on modifie les angles de diffraction, donc l'angle de déflexion du faisceau de sortie sélectionné.

Un des inconvénients notables de ces déflecteurs acousto-optiques est leur faible rendement : l'énergie du faisceau de sortie est faible. Pour que la diffraction d'un maximum d'énergie se fasse principalement selon une seule direction de sortie, il faudrait une grande épaisseur de cristal dans le sens de propagation du faisceau incident; mais alors d'une part la commande est plus difficile et d'autre part il y a des pertes par absorption.

Un des buts de l'invention est de faciliter la réalisation de déflecteurs optiques ayant les meilleurs compromis possibles entre vitesse de fonctionnement, rendement, facilité de commande, et aussi bien entendu facilité de réalisation industrielle.

A cet effet, on propose selon l'invention un déflecteur de faisceau lumineux dont la particularité est de comporter un empilement de couches transparentes d'indices de réfraction alternés se comportant comme un réseau de Bragg.

Les conditions de réfraction dépendent de l'épaisseur et des indices des couches alternées. On peut alors créer un motif périodique de modifications des conditions de réfraction, la périodicité s'étendant dans une direction perpendiculaire à la direction d'empilement. Ce motif constitue un réseau diffractant pour un faisceau lumineux incident (comme dans les déflecteurs acousto-optiques de l'art antérieur, mais à partir d'un réseau de Bragg préexistant et modulé par des moyens de commande). Selon la période spatiale du motif créé, l'angle de déflexion (ou les angles de diffraction préférentiels ) varie.

On prévoit donc en principe des moyens pour créer des contraintes dans le réseau, dans le sens de l'épaisseur des couches, ces contraintes étant distribuées avec une périodicité spatiale dans un sens parallèle aux couches.

Par rapport à un déflecteur acousto-optique de l'art antérieur, il y a d'abord l'avantage que l'on peut obtenir un très bon rendement même avec une très faible épaisseur de matériau, grâce au réseau de Bragg préexistant : un tel réseau est actif même à très faible épaisseur; et il y a aussi l'avantage que la déflexion peut être commandée par d'autres moyens que des moyens acoustiques; notamment dans le cas où le réseau de Bragg est constitué à partir de couches piézoélectriques, la commande peut être une commande électrique directe d'électrodes placées de part et d'autre de l'empilement et exerçant un effet piézoélectrique inverse.

L'effet piézoélectrique inverse est la déformation mécanique de certains matériaux en présence d'un champ électrique appliqué à ce matériau.

L'invention permet donc de réaliser des déflecteurs à commande électrique ou à commande acoustique.

L'invention sera mieux comprise et d'autres avantages apparaîtront à la lecture de la description qui va suivre et des figures annexées parmi lesquelles :

– la figure 1 représente un déflecteur selon l'invention commandé électriquement par un jeu d'électrodes disposées de part et d'autre du réseau de Bragg ;

– la figure 2 représente un déflecteur selon l'invention commandé grâce à un transducteur électroacoustique en forme de peigne interdigité ;

– la figure 3 illustre l'allure du signal de commande d'un transducteur commandant un déflecteur selon l'invention ;

– la figure 4 représente un déflecteur selon l'invention commandé par un transducteur électroacoustique accolé au réseau de Bragg ;

– la figure 5 représente un dispositif de visualisation utilisant un déflecteur selon l'invention.

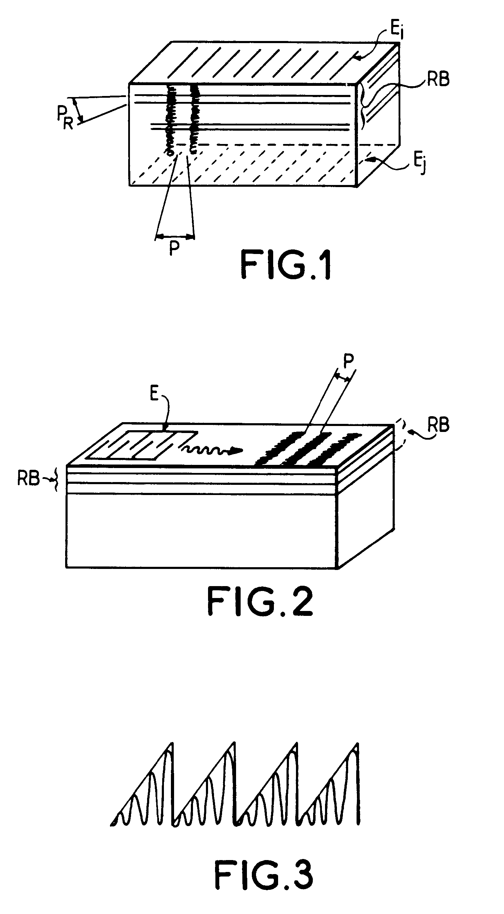

Dans le cas d'une commande électrique, les matériaux utilisés dans le réseau de Bragg sont piézoélectriques. Par exemple, des électrodes Ei et des électrodes Ej disposées de part et d'autre du réseau RB permettent d'appliquer localement un champ sur le réseau de période PR et donc d'engendrer des zones de compression différentes dans lesquelles le pas du réseau PR a changé entraînant une variation de réfraction. On a ainsi une structure périodique de période P correspondant à la distance entre électrodes Ei (et donc Ej, électrodes correspondantes sur l'autre face du réseau de Bragg) (figure 1) ; cette structure périodique donc diffractante permet la déflexion d'un faisceau incident, l'angle de déflexion étant gouverné par la période P, ou par la période de distribution spatiale des potentiels appliqués aux électrodes.

Les matériaux piézoélectriques sont de préférence de type semiconducteurs tels que les composés III-V et leurs dérivés (l'arséniure de gallium AsGa ou l'arséniure de gallium et l'aluminium AlGaAs ou le phosphore d'indium InP... ) ou de type photoréfractifs tels que le niobate de lithium $LiNbO_3$ ou les oxydes de bismuth et de silicium $Bi_{12}SiO_{20}$ ou de bismuth et de germanium $Bi_{12}GeO_{20}$ ou de type polymère piézoélectrique dopé ou non avec des molécules colorant permettant d'en faire varier l'indice de réfraction, tel que le polyfluorure de vinylidène ou des copolymères de trifluoréthylène ou des copolymères de tétrafluoroéthylène et d'acétate de vinyl.

Dans le cas d'un réseau de Bragg constitué par des matériaux piézoélectriques il est également possible d'envisager une commande électrique agissant sur des peignes interdigités d'électrodes E (figure 2 ). Ces peignes alimentés électriquement sont disposés à une extrémité du réseau de Bragg RB de façon à générer une onde acoustique de surface se propageant parallèlement aux couches et capable d'induire des zones de compressions différentes de pas P créant ainsi une structure périodique diffractante en surface. Un faisceau lumineux incident est diffracté avec des angles de diffraction privilégiés (un ou plusieurs) qui sont fonction du pas P mesuré le long de la surface.

En modifiant la période du signal électrique appliqué au transducteur (par exemple peigne interdigité) on modifie le pas P du réseau diffractant. Cela permet de régler l'angle de réflexion du faisceau incident (en transmission ou en réflexion). De façon à maximiser l'énergie défléchie la forme du signal électrique appliqué au transducteur est de préférence un signal alternatif de haute fréquence ayant une enveloppe triangulaire (figure 3). En effet, cette forme d'onde a l'avantage de minimiser les ordres secondaires de diffraction. Le coefficient de réflexion global de l'onde incidente est lié à la différence de coefficients de réflexion existant localement dans le creux et les bosses de l'onde triangulaire. L'angle de déflexion obtenu, lié à la période spatiale des contraintes engendrées, est déterminé par la fréquence de l'enveloppe du signal.

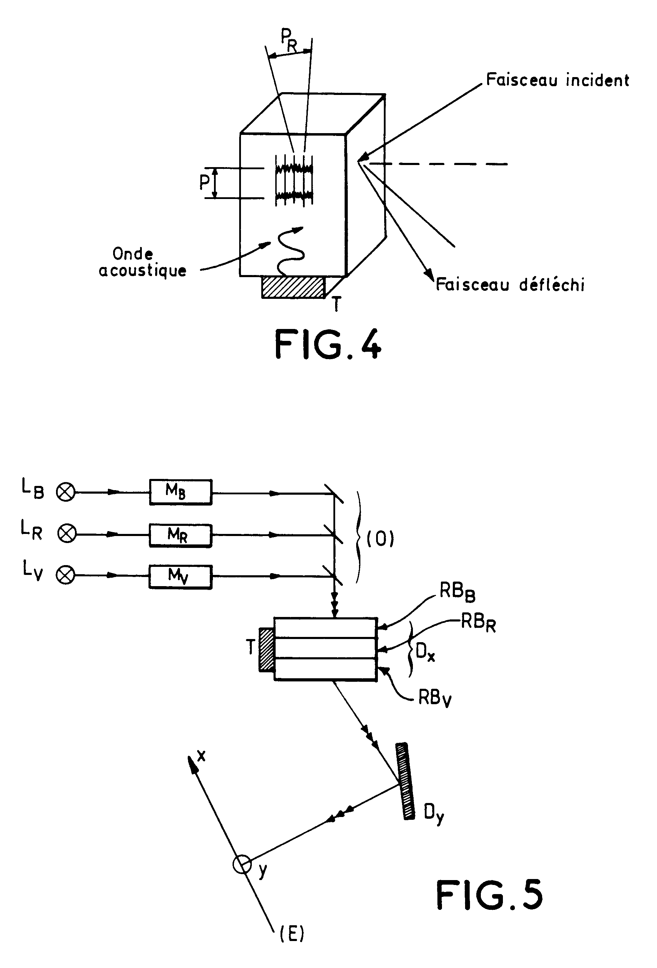

Dans le cas général d'un réseau de Bragg ne comprenant pas nécessairement des matériaux piézoélectriques, on peut de préférence accoler un transducteur électroacoustique au réseau de Bragg et ainsi générer une onde acoustique dans le réseau. La figure 4 illustre un exemple de déflecteur selon l'invention comprenant un réseau de Bragg et un transducteur T accolé au réseau. Il peut s'agir d'un barreau de type niobate de lithium dans lequel un réseau a été préalablement photoinduit sous l'action de la lumière selon une technique connue d'holographie à partir de deux ondes lumineuses planes d'énergie suffisante, qui interfèrent dans le barreau. Ce réseau ainsi créé est stable et présente un pas PR (dans le sens de l'empilement) alors que l'onde acoustique qui se propage génère une structure périodique de période P (parallèlement aux couches) conditionnée par le signal électrique commandé au transducteur. De préférence, l'allure de ce signal est celle décrite par la figure 3. Un faisceau incident dont la fréquence correspond à la condition d'accord de Bragg, voit un réseau diffractant de période P avec des minima et maxima de réflexion. Il est ainsi diffracté selon une direction préférentielle conditionnée par le pas du réseau dans le sens de propagation de l'onde acoustique.

Les déflecteurs selon l'invention peuvent être utilisés dans des applications de visualisation telles que la projection grand écran. Le dispositif représenté à la figure 5 utilise des sources de lasers $L_B$, $L_R$ et $L_V$ émettant respectivement dans le bleu, le rouge et le vert. Chaque rayon laser est alors modulé par un modulateur adapté à la longueur d'onde désirée ($M_B$, $M_R$ et $M_V$) ; en sortie des trois modulateurs les rayons incidents modulés passent par une optique (O) qui les fait converger vers un système de déflexion $D_x$ comprenant trois réseaux de Bragg superposés $RB_B$, $RB_R$ et $RB_V$ et un transducteur électroacoustique T servant de commande à la déflexion des faisceaux bleu, rouge et vert. Il s'agit d'une déflexion très rapide dans une direction donnée (direction x) ; en sortie de ce système $D_x$, les faisceaux par l'intermédiaire d'un système de déflexion lente, déflexion mécanique pouvant être assurée par un miroir (Mi) selon un axe perpendiculaire y sont alors projetés sur un écran (E). Un tel dispositif permet d'adresser simultanément les trois réseaux de Bragg par une commande unique qui est en l'occurrence le transducteur T.

**Revendications**

1. Déflecteur de faisceau lumineux, caractérisé en ce qu'il comprend :
   – un réseau de Bragg réalisé à partir d'un empilement de couches transparentes d'indices de réfraction alternés ;
   – un dispositif de commande destiné à modifier mécaniquement la périodicité du réseau.

2. Déflecteur selon la revendication 1, caractérisé en ce qu'il comporte des moyens pour créer des contraintes dans le réseau, dans le sens de l'épaisseur de l'empilement, avec une périodicité spatiale dans un sens parallèle aux couches.

3. Déflecteur de faisceau lumineux selon la revendication 2, caractérisé en ce que la déflexion est commandée électriquement et que le réseau est réalisé à partir de matériaux piézoélectriques.

4. Déflecteur de faisceau lumineux selon la revendication 3, caractérisé en ce que la commande électrique est assurée par un jeu d'électrodes (Ei et Ej) disposées de part et d'autre du réseau de façon à générer localement un champ électrique perpendiculaire au plan des couches du réseau.

5. Déflecteur de faisceau lumineux selon la revendication 2, caractérisé en ce que la commande s'effectue pair l'intermédiaire de peignes interdigités d'électrodes disposés en surface et à une extrémité du réseau de Bragg de façon à générer une onde acoustique de surface.

6. Déflecteur de faisceau lumineux selon la revendication 2, caractérisé en ce que la déflexion est commandée acoustiquement par l'intermédiaire d'un transducteur électroacoustique accolé au réseau de Bragg dans une direction perpendiculaire au plan des couches de façon à générer une onde acoustique de volume, parallèlement au plan des couches.

FIG.1

FIG.2

FIG.3

FIG.4

FIG.5

Office européen
des brevets

**RAPPORT DE RECHERCHE EUROPEENNE**

Numero de la demande

EP    91 40 2951

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | APPLIED PHYSICS LETTERS. vol. 55, no. 22, 27 Novembre 1989, NEW YORK US pages 2292 - 2294; J. HE ET AL.: 'Resonant acousto-optical interaction in superlattices' * page 2292, colonne de gauche, ligne 11 - ligne 19 * * page 2294, colonne de gauche, ligne 16 - ligne 25 * * page 2294, colonne de droite, ligne 5 - ligne 8 * * page 2294, colonne de droite, ligne 16 - ligne 24; figure 4 * | 1 | G02F1/33 |
| A |  | 2-3,6 |  |
| A | IEEE PHOTONICS TECHNOLOGY LETTERS vol. 1, no. 10, Octobre 1989, NEW YORK, US pages 307 - 309; F.C. JAIN ET AL.: 'Multiple quantum well optical modulator structures using surface acoustic wave induced Stark effect' * abrégé; figure 1 * | 1-3,5 |  |
| P,X | EP-A-0 403 389 (ETAT FRANCAIS, REPRESENTE PAR LE MINISTRE DES POSTES ...) * colonne 12, ligne 17 - ligne 40; figure 10 * | 1-3,5 | **DOMAINES TECHNIQUES RECHERCHES (Int. Cl.5 )** G02F |

Le présent rapport a été établi pour toutes les revendications

| Lieu de la recherche | Date d'achèvement de la recherche | Examinateur |
|---|---|---|
| LA HAYE | 18 FEVRIER 1992 | BATTIPEDE F. |

EPO FORM 1503 03.82 (P0402)